# FASCICULE DE BREVET EUROPEEN

(11) **EP 0 448 458 B1**
(45) Date de publication et mention de la délivrance du brevet: **22.02.1995**
(21) Numéro de dépôt: 91400732.3
(22) Date de dépôt: 19.03.1991
(51) Int. Cl.: H05B 6/78, H05B 6/80

(54) **Installation pour procéder en continu au séchage à la deshyd ratation ou à la cuisson par micro-ondes de produits granuleux ou pulvérulents**
Installation zum kontinuierlichen Trocknen, Dehydratisieren oder Kochen mittels Mikrowellen von körnigen oder pulverförmigen Produkten
Installation for continuous drying, dehydrating or cooking by micro-waves of granular or powdered products

(30) Priorité: 20.03.1990 FR 9003564
(43) Date de publication de la demande: 25.09.1991
(73) Titulaire: S.A. MICROONDES ENERGIE SYSTEMES, F-94266 Fresnes Cédex (FR)
(72) Inventeur: Crosnier Leconte, Dominique, F-13100 Aix-en-Provence (FR); Deramond, Frank, F- 92110 Clichy (FR); Germain, Alain, F-92220 Bagneux (FR)
(74) Mandataire: Caunet, Jean

(56) Documents cités:
- EP-A- 0 016 699
- EP-A- 0 141 657
- DE-A- 3 109 513
- FR-A- 972 523
- FR-A- 2 377 136
- FR-A- 2 406 929
- FR-A- 2 458 772
- FR-A- 2 526 573
- GB-A- 1 092 861
- US-A- 4 853 507

## Description

La présente invention concerne une installation pour procéder en continu au séchage, à la déshydratation ou à la cuisson par micro-ondes de produits granuleux ou pulvérulents, telle que décrite dans le préambule de la revendication 1.

Le brevet français FR-A-2 606 577 décrit un dispositif permettant de réaliser un échauffement rapide et avec un faible gradient thermique d'un liquide absorbant les micro-ondes. Ce dispositif comporte un applicateur couplé au guide d'ondes d'un générateur comprenant un tube émetteur, tel qu'un magnétron et son alimentation.

Dans ce brevet, une réalisation avantageuse prévoit que l'applicateur présente une cavité interne parallélépipédique dont chacune des trois dimensions est comprise entre 20 et 30 cm pour une fréquence de rayonnement guidé égale à 2450 MHz et que cet applicateur coopère avec deux fentes ou deux antennes de couplage espacées de 17 cm environ. Une telle réalisation permet d'obtenir dans ladite cavité interne de l'applicateur où se trouve le produit à chauffer, un champ de micro-ondes en mode hybride. Dès lors, l'échauffement du produit dans tout cet espace interne est remarquablement homogène et la montée d'un palier de température à un autre palier s'opère très rapidement.

L'inconvénient de ce dispositif connu est que le traitement du produit est discontinu et nécessite des opérations d'introduction de ce produit conditionné dans l'applicateur et d'extraction après échauffement. Il en résulte une perte de temps importante et un coût relativement onéreux. Il ne peut en fait pas s'appliquer à des produits de masse.

La demande de brevet français FR-A- 2 406 929 ayant servi à délimiter le préambule de la revendication 1, présente un dispositif pour le chauffage en continu d'une matière particulaire en mouvement, qui comprend un tube perméable aux micro-ondes, disposé verticalement et des moyens mécaniques pour faire progresser la matière particulaire dans le tube qui peuvent comprendre une vis sans fin entraînée en rotation à l'intérieur du tube par des moyens moteurs.

La présente invention a pour but d'améliorer ce dispositif connu, en proposant des moyens de transport plus solides, qui s'étendent sur toute la longueur du tube diélectrique et résistent aux sollicitations mécaniques en température, sans perturber le champ de micro-ondes.

A cet effet, la vis sans fin est métallique et est constituée par au moins un fil métallique enroulé en hélice et s'étendant à distance de l'axe de la gaine et près de la surface interne de celle-ci en ménageant un jeu avec ladite surface interne.

Ainsi, le produit à traiter canalisé par la gaine qui est perméable aux micro-ondes, s'écoule en continu à travers l'applicateur et s'échauffe sous l'effet des micro-ondes. Ce qui est surprenant c'est que la vis sans fin qui, pour les raisons de résistance aux sollicitations mécaniques en température précédemment évoquées, est métallique, ne perturbe pas le fonctionnement du chauffage par micro-ondes et ne découple pas le ou les applicateurs du guide d'ondes.

Suivant une forme de réalisation particulière, le générateur du ou de chaque applicateur est réglé de façon à exciter dans cet/ces applicateur/s un mode hybride de type TM dont le champ électrique a une composante parallèle à l'axe de la gaine.

Le dispositif de couplage est une fenêtre unique par applicateur reliant le ou chaque applicateur au guide d'onde correspondant du générateur.

Chaque applicateur présente un volume interne de forme parallélépipédique dont la longueur de chaque côté est comprise entre 20 et 30 cm pour une fréquence de rayonnement égale à 2450 MHz, les dimensions de la fenêtre étant ajustées pour rendre minimal le coefficient de réflexion vers le générateur et en particulier égales à 65 x 46 mm.

Le diamètre intérieur de la gaine diélectrique est compris entre 40 et 150 mm, en ménageant un jeu compris entre 2,5 et 15 mm avec la vis dont le fil, lorsqu'il est rond, présente un diamètre compris entre 5 et 15 mm.

Avantageusement, plusieurs applicateurs centrés sur la gaine et comportant chacun un volume interne sont disposés côte à côte et séparés par des cloisons perforées, piégeant les micro-ondes dans lesdits volumes internes sans transfert possible de l'un à l'autre, mais se laissant traverser par de l'air chaud qui empêche la condensation et qui est mis en circulation par un dispositif de ventilation et de chauffage, lesdits applicateurs étant couplés avec des générateurs, tantôt d'un côté, tantôt de l'autre.

L'air chaud circule de l'aval vers l'amont si l'on considère le sens d'écoulement du produit à traiter dans la gaine.

La gaine et la vis sans fin peuvent coopérer, en aval du ou de chaque dispositif de couplage, avec un dispositif réducteur de la section de passage qui peut être constitué par une tige diélectrique s'étendant coaxialement dans la gaine et comportant un circuit interne de refroidissement.

Divers autres caractéristiques et avantages de l'invention ressortent d'ailleurs de la description détaillée qui suit.

Des formes de réalisation de l'objet de l'invention sont représentées, à titre d'exemples non limitatifs, sur le dessin annexé.

Sur ce dessin :
- la figure 1 est une perspective illustrant une structure de base de l'installation conforme à l'invention,
- la figure 2 est une élévation-coupe montrant une première forme de réalisation de cette installation.
- la figure 3 est une vue analogue à la figure 2 concernant une deuxième forme de réalisation,
- la figure 4 est un plan vu de dessus pris relativement à la figure 3,
- la figure 5 est une vue analogue à la figure 2, schématisant une troisième forme de réalisation,
- la figure 6 est une coupe partielle illustrant à grande échelle, un perfectionnement apporté à la gaine de la figure 1,
- la figure 7 est une vue analogue à la figure 6, mais à moins grande échelle, se rapportant aux formes de réalisation des figures 2, 3 et 5 ainsi perfectionnées,
- la figure 8 est une vue analogue à la figure 7, illustrant une variante de réalisation du perfectionnement.

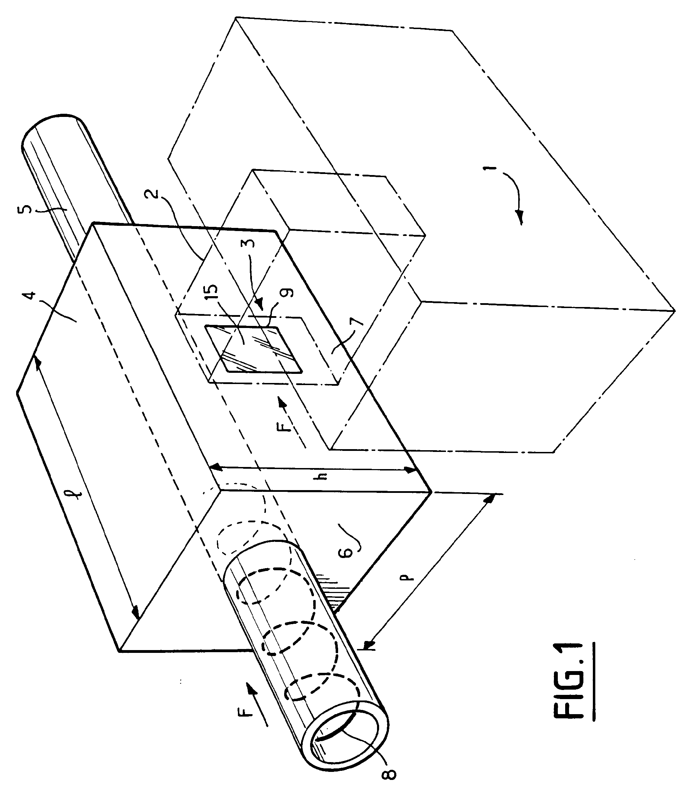

Ainsi que cela ressort de la figure 1, la structure de base comporte un générateur d'ondes d'hyperfréquences 1 comprenant un tube émetteur et son alimentation. Le tube, tel qu'un magnétron, est monté dans un guide d'onde 2 relié par un dispositif de couplage 3 à un applicateur 4.

La structure de base comporte également une gaîne 5 traversant les parois latérales 6 de l'applicateur 4, parallèlement à sa paroi antérieure de couplage 7. L'applicateur 4 est entièrement fermé et ses parois latérales 6 font avantageusement corps avec la gaine 5. Celle-ci contient une vis sans fin rotative de transport 8, constituée par un fil enroulé en hélice comme cela est le cas pour certains ressorts.

Dans l'exemple représenté, l'applicateur 4 est celui décrit dans le brevet français 2 606 577 en se référant à la figure 1. Il est parallélépipédique et ses côtés mesurent au plus quatre fois la demi-longueur d'onde guidée du rayonnement émis. La fréquence des micro-ondes étant généralement comprise entre 2 et 3 GHz, les dimensions de l'applicateur sont comprises entre 20 et 30 mm.

Plus précisément, pour une fréquence de 2450 MHz, la section droite h x p de l'applicateur 4 est égale à 22x20cm et la longueur est égale à 30 cm.

Par ailleurs, dans ce même exemple, le dispositif de couplage 3, au lieu d'être constitué par deux fentes ou deux antennes écartées l'une de l'autre, est formé par une fenêtre unique 9. Cette fenêtre est ajustée pour rendre minimal le coefficient de réflexion vers le générateur. Ainsi, pour la fréquence précitée de 2450 MHz et les dimensions choisies de l'applicateur 4, la fenêtre mesure 65 x 46 mm.

Le générateur 1 est réglé de façon à exciter dans cet applicateur 4 un mode hybride de type TM (transversal magnétique) de micro-ondes dont le champ électrique a une composante E parallèle à l'axe commun de la gaine 1 et de la vis 8. Dans ces conditions, le rendement énergétique est optimisé.

Bien entendu, la gaine 5 est en matière diélectrique qui ne présente pas de pertes micro-ondes. Elle peut être en matière plastique telle que du polypropylène, du polyéthylène, du polytétrafluoroéthylène... ou en verre résistant au choc thermique, en porcelaine, en céramique ...

En revanche, la vis 8 est en acier pour résister aux diverses sollicitations mécaniques résultant de l'entraînement, sous température relativement élevée. L'expérience a montré que le fonctionnement de l'applicateur 4 ne se trouve pas perturbé par la présence de ce corps métallique et que le couplage entre guide d'ondes 2 et applicateur 4 reste établi dans d'excellentes conditions. Ce fait expérimental est surprenant et de nature à justifier l'activité inventive.

Si les caractéristiques dimensionnelles de l'applicateur 4 sont déterminantes en relation avec la fréquence du rayonnement guidé pour obtenir une température de traitement homogène, par contre, celles du transporteur 5, 8 le sont beaucoup moins.

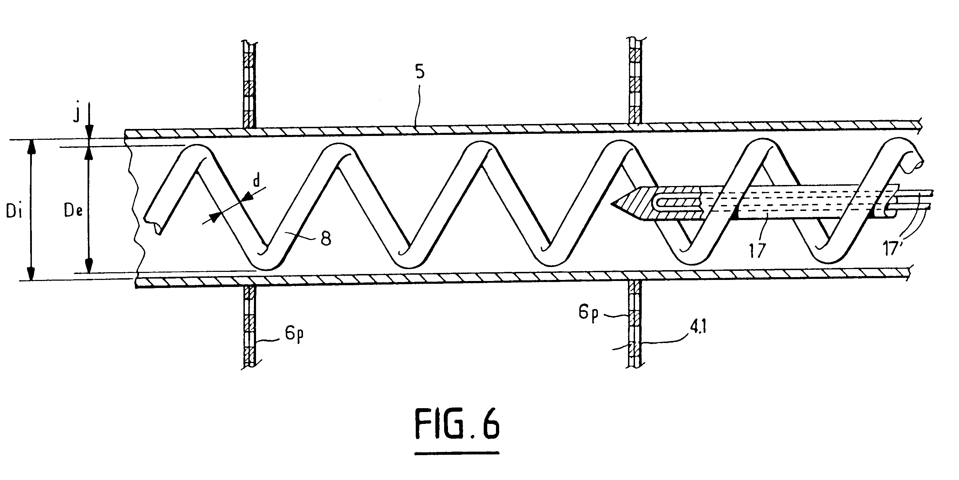

Ainsi, le diamètre intérieur Di (figure 6) de la gaine 5 est avantageusement égal ou inférieur à la demi-longueur d'onde guidée; dans l'exemple choisi, il est égal à 65 mm. Néanmoins, l'expérience a montré que le diamètre intérieur Di de la gaine peut être compris entre 40 et 150 mm.

En revanche, le diamètre extérieur De de la vis 8 par rapport au diamètre intérieur Di de la gaine 5 et la forme de cette vis sont critiques, à seule fin que ladite vis de nature métallique soit compatible avec la présence des micro-ondes dans l'applicateur 4.

Ainsi, le diamètre De de la vis est plus petit que le diamètre Di de la gaine afin de laisser subsister entre vis et gaine un jeu "j" compris entre 2,5 et 15 mm, jeu qui bien qu'en rapport avec ces diamètres est choisi en fonction des paramètres concernant la nature et l'état du produit, sa vitesse de cheminement, l'échauffement ... et ceux concernant le dispositif micro-ondes.

Dans l'exemple précité, le diamètre "d" (figure 6) du fil métallique constituant la vis 8 est égal à 10 mm pour un diamètre extérieur d'enroulement "De" de 60 mm. Cependant, le diamètre "d" peut être compris entre 5 et 15 mm et son choix est également déterminé comme indiqué dans ce qui précède pour le jeu "j". Ce fil présente généralement une section circulaire, mais d'autres sections peuvent être envisagées pour l'entraînement du produit.

La rotation de la vis provoque un avancement lent et régulier du produit, mais la partie de celui-ci qui se trouve entre la surface interne de la gaine 5 et ladite vis métallique constitue un écran tel que les micro-ondes subissent une réflexion négligeable.

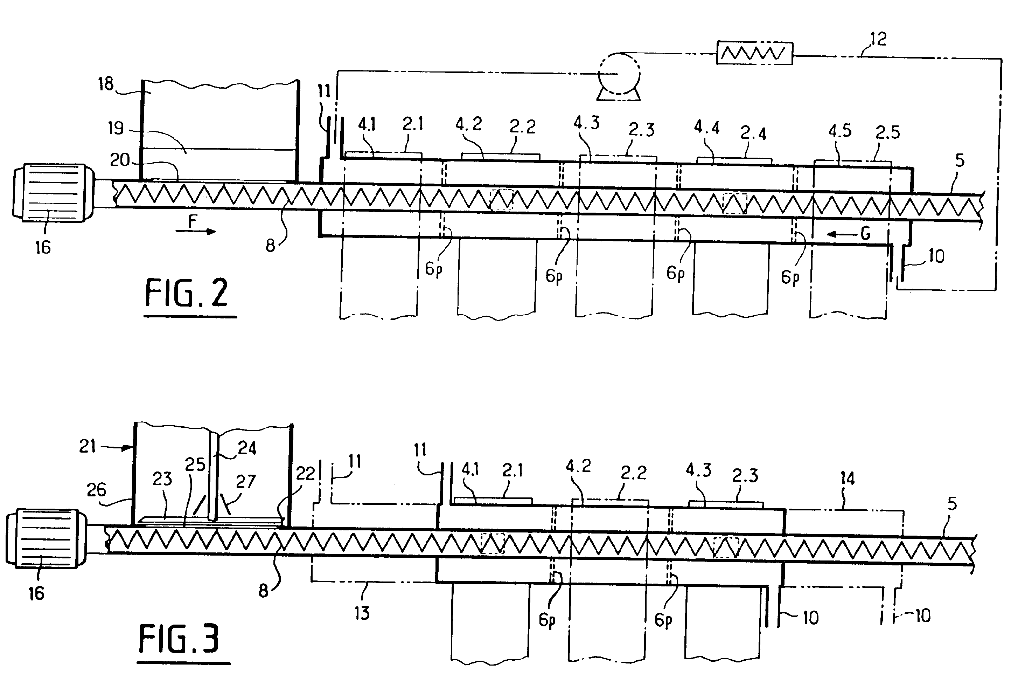

Les figures 2 à 5 montrent que plusieurs structures de base analogues à celle qui est illustrée par la figure 1, peuvent être montées en série sur une gaine commune 5, ces structures étant désignées par les références générales 4 et 2 suivies du quantième de leur rang. Les applicateurs 4.1, 4.2... 4.5, aussi nombreux soient-ils, sont disposés côte à côte et séparés l'un de l'autre par des parois latérales 6.p qui, au lieu d'être pleines, sont perforées.

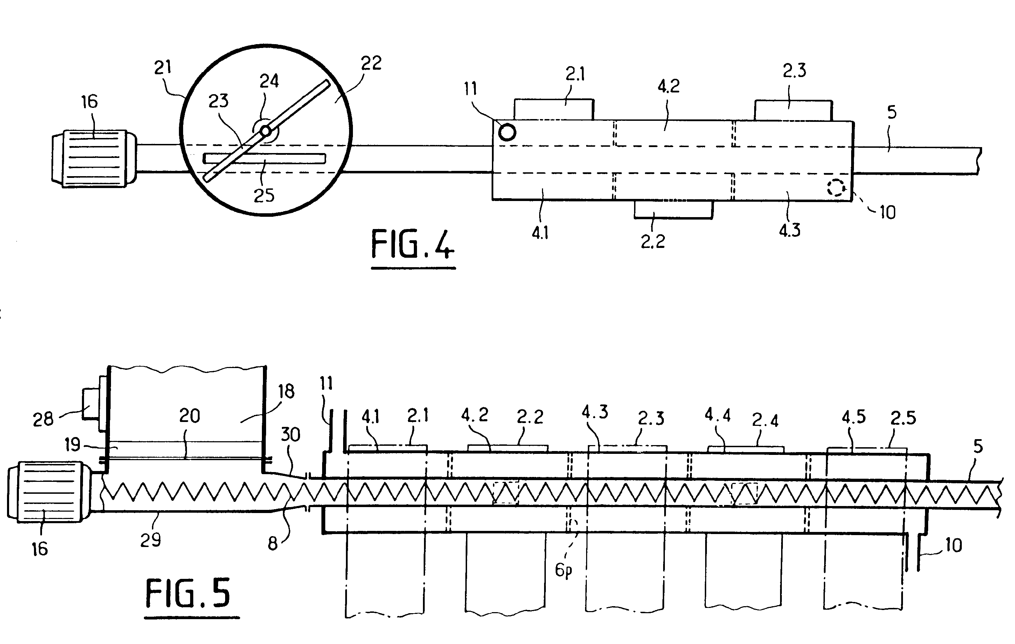

Pour diverses raisons et en particulier pour empêcher le produit de coller à la paroi de la gaine 5 (farine humide par exemple), il peut être avantageux de réchauffer ladite paroi. A cet effet, si l'on considère le sens F de l'avancement du produit, de l'air chaud est soufflé à contre courant (sens de la flèche G opposé à celui de la flèche F) dans le tunnel défini par cette rangée d'applicateurs 4.1 à 4.5 (figures 2 et 5) ou 4.1 à 4.3 (figure 3) entre une tubulure d'entrée 10 de l'applicateur 4.5 ou 4.3 et une tubulure de sortie 11 de l'applicateur 4.1.

Les parois latérales perforées 6p des applicateurs laissent passer l'air chaud pour empêcher la condensation sur la paroi de la gaine 5, mais les perforations sont telles que les micro-ondes restent piégées dans les cavités internes de ces applicateurs. Les tubulures 10 et 11 sont raccordées à un circuit de ventilation et de chauffage 12. Il est à noter que ce montage en série des applicateurs 4 est effectué avec couplage, tantôt à droite, tantôt à gauche, pour pouvoir loger facilement les générateurs. Ainsi, les guides d'ondes de rang pair 2.2 et 2.4 représentés en trait plein sur les figures 2 et 5 se trouvent situés derrière les applicateurs, tandis que les guides d'ondes de rang impair 2.1, 2.3 et 2.5 représentés en trait mixte sur ces mêmes figures se trouvent placés devant. Sur les figures 3 et 4, la disposition est inversée.

Il peut être avantageux de chauffer la gaine 5 au-delà de la rangée des applicateurs. A cet effet et ainsi que cela ressort de la figure 3, l'applicateur amont 4.1 peut être prolongé par un conduit 13 de même section muni de la tubulure de sortie 11 et/ou l'applicateur aval 4.3 peut être prolongé par un conduit 14 muni de la tubulure d'entrée 10.

Bien entendu, il est souhaitable de protéger contre l'échauffement le générateur 1 et à cet effet, un opercule 15 (figure 1) en polytétrafluoroéthylène est monté dans la fenêtre de couplage 9. Il isole ainsi contre la transmission de chaleur, mais ne s'oppose pas au couplage hyperfréquence.

Il est indiqué dans ce qui précède que la vis 8 est rotative. Elle est accouplée à son extrémité amont à un groupe motovariateur de vitesse 16 (figures 2 à 5) qui permet de régler le débit du produit.

Par ailleurs, au cours de son traitement par échauffement, le produit subit une variation de volume, plus précisément une diminution. Il est donc souhaitable qu'en aval de chaque applicateur 4, la section de passage de la gaine 5 soit adaptée, ce qui permet d'éviter l'apparition de vides dans le "boudin" de produit en déplacement et d'homogénéiser mieux encore l'échauffement.

A cet effet, le transporteur 5, 8 peut coopérer avec un dispositif réducteur de la section de passage.

La figure 6 montre un tel dispositif qui est constitué par une tige 17 en matière diélectrique s'étendant coaxialement dans la gaine 5 vers l'aval à partir du premier applicateur 4.1. La section de cette tige correspond à la diminution précitée de la section de passage de ladite gaine.

Cette tige est avantageusement refroidie car, si sa température à coeur était celle du produit traité, elle risquerait de se déformer. Dès lors, un circuit de refroidissement 17' est incorporé dans la tige. Par exemple, ce circuit peut comporter un tube coudé sur lequel ladite tige est surmoulée et dans lequel de l'eau de refroidissement circule.

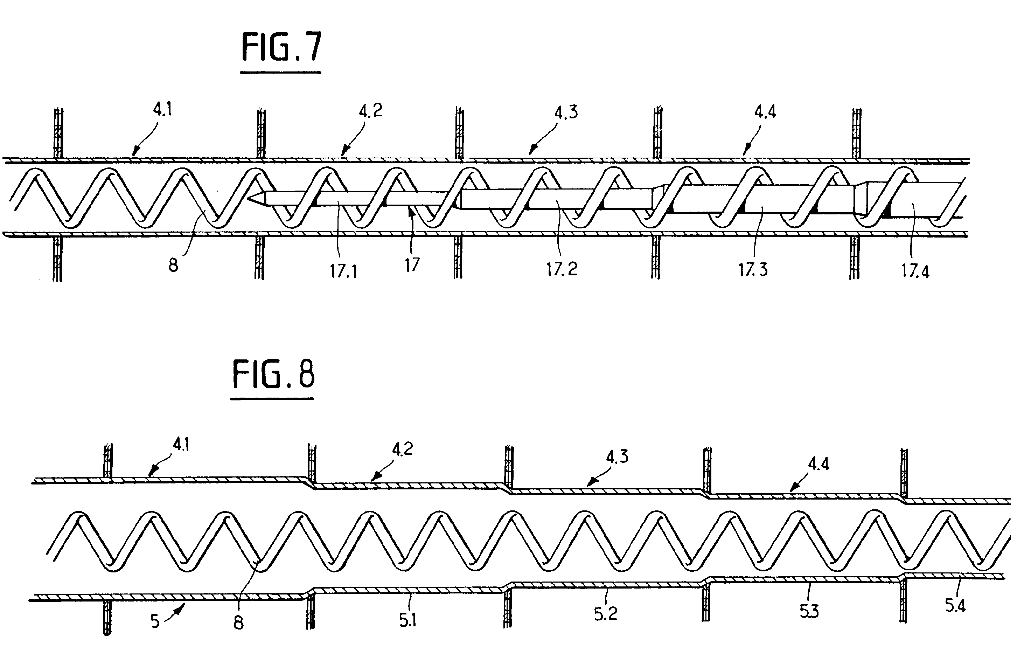

Lorsque l'installation comporte plusieurs applicateurs montés en série, la section de la tige 17 croît, ainsi que cela ressort de la figure 7, à chaque fois que la température du produit augmente, c'est-à-dire lors du franchissement de chaque applicateur. Ainsi, la tige 17 selon la figure 7 présente des tronçons étagés 17.1, 17.2, 17.3... de diamètres croissants.

Suivant une variante illustrée par la figure 8, le dispositif réducteur de la section de passage est constitué par la gaine 5 elle-même qui présente des tronçons successifs 5.1, 5.2, 5.3... de diamètres intérieurs décroissants.

D'ailleurs, la gaine 5, au lieu d'être étagée, peut être conique et coopérer avec une vis 8 également conique.

Bien entendu, il est possible de combiner entre elles une gaine étagée ou conique et une tige également étagée.

Cette installation nécessite que la gaine 5 soit convenablement gavée de produit, afin d'éviter les vides qui nuiraient à l'homogénéité de l'échauffement. Pour gaver en amont, plusieurs formes de réalisation peuvent être mises en oeuvre.

Suivant la première forme de réalisation illustrée par la figure 2 et procédant par gravité, le dispositif d'alimentation comporte une auge 18 dont les flancs inférieurs convergents 19 débouchent en regard d'une fente 20 que présente la gaine 5 entre l'applicateur amont 4.1 et le groupe motovariateur 16. L'auge 18 peut être remplacée par une simple buse cylindrique raccordée perpendiculairement ou en biais sur ladite gaine.

Ce dispositif d'alimentation selon la figure 2 convient lorsque le produit s'écoule parfaitement par gravité et remplit convenablement tous les interstices.

Si l'écoulement du produit est plus difficile, la deuxième forme de réalisation illustrée par les figures 3 et 4 peut être mise en oeuvre. Elle comporte une cuve 21, près du fond 22 de laquelle défile une pale racleuse 23 accouplée à un arbre d'entraînement 24. Le fond 22 délimite une fente 25 excentrée et située en regard d'un déversoir 26 de la gaine 5, fente qui reçoit le produit balayé par la pale 23. Un cône 27 peut être prévu dans la cuve pour s'opposer à la formation de ponts dans le produit stocké et favoriser un remplissage continu et complet de la gaine 5.

Si l'écoulement est encore plus difficile, la troisième forme de réalisation illustrée par la figure 5 peut être mise en oeuvre. Elle ressemble à la première, mais l'auge 18 est munie d'au moins un vibreur 28 et alimente la fente 20 d'un conduit 29 raccordé par un convergent de gavage 30 à la gaine 5. La vis 8 s'étend dans ce conduit pour forcer le produit à pénétrer dans la gaine après une précompression dans le convergent. La partie de la vis se trouvant dans le conduit 29 peut être identique à celle tournant dans la gaine ; il peut cependant être avantageux d'accroître son diamètre et de conférer à son enveloppe à l'endroit du convergent une forme conique.

L'expérience a montré que dans cette installation à micro-ondes, aucun collage du produit sur la paroi de la gaine 5 n'apparaît, contrairement à ce qui se passerait sous air chaud notamment si le produit était de la farine.

La température mesurée à la sortie de la gaine par thermocouple est homogène et peut être régulée à la valeur désirée en intervenant sur le débit du produit (la vitesse du groupe motovariateur 16) et/ou la puissance micro-ondes des générateurs. Par ailleurs, la montée d'un palier de température à un autre palier s'effectue très rapidement, en quelques minutes.

## Revendications

1. Installation pour procéder en continu au séchage, à la déshydratation ou à la cuisson de produits granuleux ou pulvérulents tels que des céréales, de la farine ou de la poudre d'oxydes métalliques au moyen de micro-ondes, comprenant au moins un applicateur (4), relié chacun à un générateur (1) par l'intermédiaire d'un dispositif de couplage (3), et une gaine diélectrique (5) entourant une vis sans fin rotative (8) pour le transport du produit à traiter, la gaine (5) et la vis sans fin (8) traversant au moins ledit/lesdits applicateur/s (4),
caractérisée en ce que la vis sans fin (8) est métallique et est constituée par au moins un fil métallique enroulé en hélice et s'étendant à distance de l'axe de la gaine et près de la surface interne de celle-ci en ménageant un jeu (j) avec ladite surface interne de la gaine (5).

2. Installation selon la revendication 1, caractérisée en ce que le ou chaque applicateur (4) fonctionne en mode hybride.

3. Installation selon la revendication 2, caractérisée en ce que le générateur (1) du ou de chaque applicateur (4) est réglé de façon à exciter dans cet/ces applicateur/s un mode hybride de type TM dont le champ électrique a une composante (E) parallèle à l'axe de la gaine (5).

4. Installation selon la revendication 1 caractérisée en ce que le dispositif de couplage (3) est une fenêtre unique (9) par applicateur (4) reliant le ou chaque applicateur (4) au guide d'onde correspondant (2) du générateur (1).

5. Installation selon la revendication 4, caractérisée en ce que chaque applicateur (4) présente un volume interne de forme parallélépipédique dont la longueur (p, h, l) de chaque côté est comprise entre 20 et 30 cm pour une fréquence de rayonnement sensiblement égale à 2450 MHz, les dimensions de la fenêtre (9) étant ajustées pour rendre minimal le coefficient de réflexion vers le générateur et en particulier égales à 65 x 46 mm.

6. Installation selon la revendication 1 ou 5 caractérisée en ce que le diamètre intérieur (Di) de la gaine diélectrique (5) est compris entre 40 et 150 mm, et en ce que ledit jeu (j) avec la vis sans fin (8) est compris entre 2,5 et 15 mm, le fil de ladite vis sans fin (8) étant rond et présentant un diamètre (d) compris entre 5 et 15 mm.

7. Installation selon la revendication 6, caractérisée en ce que sont sensiblement égaux à 65 mm le diamètre intérieur (Di) de la gaine (5), 60 mm le diamètre extérieur (De) de la vis sans fin (8) et 10 mm le diamètre (d) du fil métallique.

8. Installation selon l'une quelconque des revendications 1 à 7, caractérisée en ce que plusieurs applicateurs (4.1-4.3 ; 4.1- 4.5) centrés sur la gaine (5) et comportant chacun un volume interne sont disposés côte à côte et séparés par des cloisons perforées (6 p) piégeant les micro-ondes dans lesdits volumes internes sans transfert possible de l'un à l'autre, mais se laissant traverser par de l'air chaud qui empêche la condensation et qui est mis en circulation par un dispositif de ventilation et de chauffage (12), lesdits applicateurs étant couplés avec des générateurs tantôt d'un côté (2.1, 2.3, 2.5; 2.2), tantôt de l'autre (2.2, 2.4; 2.1, 2.3).

9. Installation selon la revendication 4 ou 8, caractérisée en ce que la fenêtre de couplage du ou de chaque applicateur (4 ; 4.1-4.3 ; 4.1-4.5) est obturée par un opercule (15) diélectrique et isolant thermiquement.

10. Installation selon la revendication 8, caractérisée en ce que la rangée d'applicateurs (4.1-4.3 ; 4.1-4.5) est prolongée, à au moins l'une de ses extrémités, par un conduit (13, 14) également traversé par l'air chaud véhiculé le long de la gaine (5).

11. Installation selon la revendication 8 ou 10, caractérisée en ce que l'air chaud circule (G) de l'aval vers l'amont, si l'on considère le sens d'écoulement (F) du produit à traiter dans la gaine (5).

12. Installation selon la revendication 1, caractérisée en ce que la gaine (5) est alimentée en produit à traiter par un dispositif pouvant procéder par gravité ou bien en force au moyen d'une vis de gavage.

13. Installation selon la revendication 1, caractérisée en ce que la gaine (5) et la vis sans fin (8) coopèrent, en aval du ou de chaque dispositif de couplage (3), avec un dispositif réducteur de la section de passage.

14. Installation selon la revendication 13, caractérisé en ce que le dispositif réducteur de section est constitué par une tige diélectrique (17) s'étendant coaxialement dans la gaine (5).

15. Installation selon la revendication 14, caractérisée en ce que la tige (17) comporte un circuit interne de refroidissement (17′).

16. Installation selon la revendication 13, caractérisée en ce que le dispositif réducteur de section est constitué par la gaine (5) elle-même qui comporte au moins un rétrécissement (5.1-5.4).

## Patentansprüche

1. Einrichtung zum kontinuierlichen Trocknen, Dehydratisieren oder Kochen mittels Mikrowellen von körnigen oder pulverförmigen Produkten, beispielsweise Getreide, Mehl oder Metalloxidpuder, mit mindestens einem Applikator (4), der jeweils mit einem Generator (1) mittels einer Kopplungsvorrichtung (3) verbunden ist und mit einer dielektrischen Hülse (5), die eine rotierende Förderschnecke (8) für den Transport des zu behandelnden Produkts umhüllt, wobei die Hülse (5) und die Förderschnecke (8) zumindest den/die Applikator/en (4) durchqueren,
dadurch gekennzeichnet,
daß die Förderschnecke (8) metallisch ist und von mindestens einem schraubenförmig gewickelten Metalldraht gebildet wird und beabstandet von der Achse der Hülse und nahe deren innerer Oberfläche verläuft, wodurch ein Zwischenraum (j) zu der Innenoberfläche der Hülse (5) geschaffen wird.

2. Einrichtung nach Anspruch 1, dadurch gekennzeichnet, daß der oder jeder Applikator (4) im Hybridmodus arbeitet.

3. Einrichtung nach Anspruch 2, dadurch gekennzeichnet, daß der Generator (1) des oder jedes Applikators (4) so geregelt ist, daß er in dem/den Applikator/en einen Hybridmodus des Typs TM hervorruft, dessen elektrisches Feld eine Komponente (E) parallel zur Achse der Hülse (5) aufweist.

4. Einrichtung nach Anspruch 1, dadurch gekennzeichnet, daß die Kopplungsvorrichtung (3) ein einziges Fenster (9) im Applikator (4) ist, die den oder jeden Applikator (4) mit dem entsprechenden Wellenleiter (2) des Generators (1) verbindet.

5. Einrichtung nach Anspruch 4, dadurch gekennzeichnet, daß jeder Applikator (4) ein inneres parallelepipedisches Volumen aufweist, dessen Länge (p, h, l) jeder Seite zwischen 20 und 30 cm für eine Strahlungsfrequenz von im wesentlichen 2450 MHz beträgt, wobei die Abmessungen des Fensters (9) zur Minimierung des Koeffizienten der Reflexion zum Generator eingerichtet sind und im besonderen 65 x 46 mm betragen.

6. Einrichtung nach Anspruch 1 oder 5, dadurch gekennzeichnet, daß der Innendurchmesser (Di) der dielektrischen Hülse (5) zwischen 40 und 150 mm beträgt und daß der Zwischenraum (j) zu der Förderschnecke (8) zwischen 2,5 und 15 mm beträgt, wobei der Draht der Förderschnecke (8) rund ist und einen Durchmesser (d) zwischen 5 und 15 mm aufweist.

7. Einrichtung nach Anspruch 6, dadurch gekennzeichnet, daß der Innendurchmesser (Di) der Hülse (5) im wesentlichen 65 mm beträgt, der Außendurchmesser (De) der Förderschnecke (8) im wesentlichen 60 mm beträgt und der Durchmesser (d) des Metalldrahts im wesentlichen 10 mm beträgt.

8. Einrichtung nach einem der Ansprüche 1 bis 7, dadurch gekennzeichnet, daß mehrere Applikatoren (4.1-4.3; 4.1-4.5), die auf der Hülse (5) zentriert sind und jeweils ein inneres Volumen aufweisen, Seite an Seite angeordnet und durch perforierte Trennwände (6 p) getrennt sind, die die Mikrowellen in den inneren Volumen ohne möglichen Transfert von einem zum anderen halten, die jedoch von Warmluft, die die Kondensation verhindert und durch eine Ventilations- und Heizvorrichtung (12) in Zirkulation versetzt wird, durchquert werden können, wobei die Applikatoren mit Generatoren bald an einer Seite (2.1, 2.3, 2.5; 2.2), bald an der anderen (2.2, 2.4; 2.1, 2.3) gekoppelt sind.

9. Einrichtung nach Anspruch 4 oder 8, dadurch gekennzeichnet, daß das Kupplungsfenster des oder jedes Applikators (4; 4.1-4.3; 4.1-4.5) mittels eines dielektrischen und thermisch isolierenden Deckels (15) abgedichtet ist.

10. Einrichtung nach Anspruch 8, dadurch gekennzeichnet, daß die Reihe der Applikatoren (4.1-4.3; 4.1-4.5) mindestens an einem ihrer Enden mittels einer Leitung (13, 14) verlängert ist, die auch von der durch die Länge der Hülse (5) beförderten Warmluft durchquert wird.

11. Einrichtung nach Anspruch 8 oder 10, dadurch gekennzeichnet, daß die Warmluft (G) gegen die Stromrichtung zirkuliert, wenn man die Flußrichtung (F) des zu behandelnden Produkts in der Hülse (5) betrachtet.

12. Einrichtung nach Anspruch 1, dadurch gekennzeichnet, daß die Hülse (5) mit dem zu behandelnden Produkt durch eine Vorrichtung versorgt wird, die durch Gravitation oder auch durch Krafteinwirkung mittels einer Zufuhrschnecke wirken kann.

13. Einrichtung nach Anspruch 1, dadurch gekennzeichnet, daß die Hülse (5) und die Förderschnecke (8) stromabwärts der oder jeder Kopplungsvorrichtung (3) mit einer Vorrichtung zur Verringerung des Durchgangsquerschnitts zusammenwirken.

14. Einrichtung nach Anspruch 13, dadurch gekennzeichnet, daß die Vorrichtung zur Verringerung des Querschnitts durch einen dielektrischen Schaft (17), der sich koaxial in der Hülse (5) erstreckt, gebildet wird.

15. Einrichtung nach Anspruch 14, dadurch gekennzeichnet, daß der Schaft (17) einen internen Kreislauf zum Abkühlen (17′) aufweist.

16. Einrichtung nach Anspruch 13, dadurch gekennzeichnet, daß die Vorrichtung zur Verringerung des Querschnitts durch die Hülse (5) selbst, die mindestens eine Verengung (5.1-5.4) aufweist, gebildet wird.

## Claims

1. Installation for continuously drying, dehydrating or microwave baking granular or powdered products, such as cereals, flour or metal oxide powders by means of microwaves, comprising in particular at least one applicator (4), connected to a generator (1) by means of a coupling device (3), and a dielectric tube (5) surrounding a rotating endless screw (8) for conveying the product to be treated, the tube (5) and the endless screw (8) passing through at least said applicator or applicators (4), characterised in that the endless screw (8) is metallic and is constituted by at least one helically wound metal wire extending at a distance from the axis of the tube and close to the internal surface thereof while providing a clearance (j) with said internal surface of the tube (5).

2. Installation according to claim 1, characterised in that the or each applicator (4) operates in hybrid mode.

3. Installation according to claim 2, characterised in that the generator (1) of the or each applicator (4) is controlled in such a way as to excite in said applicator or applicators a TM type hybrid mode whose electric field has a component (E) parallel to the axis of the tube (5).

4. Installation according to claim 1, characterised in that the coupling device (3) is a single window (9) per applicator (4) connecting the or each applicator (4) to the corresponding wave guide (2) of the generator (1).

5. Installation according to claim 4, characterised in that each applicator (4) has a parallelipiped shape internal volume whose length (p, h, l) on each side is comprised between 20 and 30 cm for a radiation frequency substantially equal to 2450 MHz, the dimensions of the window (9) being adjusted to minimise the reflection coefficient towards the generator, and more particularly equal to 65 x 46 mm.

6. Installation according to claim 1 or 5, characterised in that the internal diameter (Di) of the dielectric tube (5) is comprised between 40 and 150 mm, and in that said clearance (j) with the endless screw (8) is comprised between 2.5 to 15 mm with the wire of said endless screw (8) being round and having a diameter (d) comprised between 5 and 15 mm.

7. Installation according to claim 6, characterised in that the internal diameter (Di) of the tube (5) is substantially equal to 65 mm, the external diameter (De) of the endless screw (8) to 60 mm and the diameter (d) of the wire to 10 mm.

8. Installation according to any one of claims 1 to 7, characterised in that several applicators (4.1-4.3; 4.1-4.5) centred on the tube (5) and each one comprising an internal volume, are arranged side by side and separated by perforated partitions (6 p), trapping the microwaves in said internal volumes without possible transfer from one to the other, but letting hot air pass through them which hot air prevents condensation and is circulated by means of a ventilation and heating device (12), said applicators being coupled with generators sometimes on one side (2.1, 2.3; 2.5, 2.2) sometimes on the other side (2.2, 2.4; 2.1, 2.3).

9. Installation according to claim 4 or 8, characterised in that the coupling window of the or each applicator (4; 4.1-4.3; 4.1-4.5) is sealed by a dielectric and thermally insulating protective cover (15).

10. Installation according to claim 8, characterised in that the row of applicators (4.1-4.3; 4.1-4.5) is extended, at least at one of its ends, by a conduit (13, 14) also conveying hot air along the tube (5).

11. Installation according to claim 8 or 10, characterised in that the hot air (G) circulates from downstream towards upstream, taken in the flow direction (F) of the product to be treated in the tube (5).

12. Installation according to claim 1, characterised in that the tube (5) is fed with product to be treated by a device able to operate via gravity or force by means of a supercharging screw.

13. Installation according to claim 1, characterised in that the tube (5) and the screw (8) co-operate, downstream of the or each coupling device (3), with a passage section reducing device.

14. Installation according to claim 13, characterised in that the section reducing device comprises a dielectric rod (17) extending coaxially in the tube (5).

15. Installation according to claim 14, characterised in that the rod (17) comprises an internal cooling circuit (17′).

16. Installation according to claim 13, characterised in that the section reducing device is constituted by the tube (5) which in turn comprises at least one reduced portion (5.1-5.4).
